# EUROPEAN PATENT APPLICATION

(11) **EP 4 361 565 A2**
(43) Date of publication of application: **01.05.2024**
(21) Application number: 23205872.7
(22) Date of filing: 25.10.2023
(51) Int. Cl.: G01C 21/30, G01S 17/931, G06T 7/579

(54) **METHOD, DEVICE, SYSTEM AND COMPUTER-READABLE STORAGE MEDIUM FOR VEHICLE POSITIONING**

(30) Priority: 31.10.2022 CN 202211346634
(71) Applicant: Volvo Car Corporation, 405 31 Göteborg (SE)
(72) Inventor: ZHONG, Weiyu, Shanghai (CN)
(74) Representative: Maiwald GmbH

(57) **Abstract**

The present disclosure provides a method, a device, a system and a computer-readable storage medium for vehicle positioning. The method comprises: obtaining a fused map of a scenario where a vehicle is located, including a point cloud basemap and a vector map describing the scenario; capturing at least one image frame of a surrounding environment of the vehicle within the scenario through a camera unit, and extracting a plurality of feature points from the at least one image frame; performing a matching of the plurality of feature points with point cloud data in the point cloud basemap to determine a position of the vehicle within the vector map according to a result of the matching; and measuring a relative displacement of the vehicle within the scenario through an inertial measurement unit, and updating the position of the vehicle within the vector map according to the relative displacement.

## Description

### CROSS-REFERENCE TO RELATED APPLICATION

The present disclosure claims the benefit of priority of co-pending Chinese Patent Application No. 202211346634.3, filed on October 30, 2022, and entitled "METHOD, DEVICE, SYSTEM AND COMPUTER-READABLE STORAGE MEDIUM FOR VEHICLE POSITIONING", the contents of which are incorporated in full by reference herein.

### TECHNICAL FIELD

The present disclosure relates to the field of vehicles, and more particularly, to a method, a device, a system and a computer-readable storage medium for vehicle positioning.

### BACKGROUND

As one of the key technologies to improve the experience in driving and riding, vehicle positioning technology enables precise positioning of vehicles through various positioning means and various types of sensors, thereby providing important position information to the driver of the vehicle or the driving assistance system or automatic driving system in the vehicle in order to make appropriate driving decisions. At present, the most common vehicle positioning technology is Global Positioning System (GPS) technology, which can achieve high-precision positioning in outdoor environment, but in indoor environment, it is often faced with problems such as signals being inclined to be attenuated or occluded, positioning precision being decreased and even failed, and so on.

The main application of vehicle positioning technology in indoor environment is vehicle positioning in indoor parking lot. However, large-scale indoor parking lots provided by shopping malls, residential quarters and office buildings often have problems such as complex terrains and routes, unclear paths, etc. If a vehicle cannot be positioned accurately in the parking lot, the driver may be unable to determine his/her position where he/she is located in the indoor parking lot, which in turn affects making accurate driving decisions.

Therefore, there is a need for a technology that can effectively position a vehicle, especially for accurately positioning a vehicle in an indoor scenario such as a parking lot.

### SUMMARY

According to an aspect of the present disclosure, there is provided a method for vehicle positioning, comprising: obtaining a fused map of a scenario where a vehicle is located, wherein the fused map includes a point cloud basemap and a vector map describing the scenario; capturing at least one image frame of a surrounding environment of the vehicle within the scenario through a camera unit and extracting a plurality of feature points from the at least one image frame; performing a matching of the plurality of feature points with point cloud data in the point cloud basemap to determine a position of the vehicle within the vector map according to a result of the matching; and measuring a relative displacement of the vehicle within the scenario through an inertial measurement unit and updating the position of the vehicle within the vector map according to the relative displacement.

According to another aspect of the present disclosure, there is provided a device for vehicle positioning, comprising: a wireless communication unit configured to obtain a fused map of a scenario where a vehicle is located, wherein the fused map includes a point cloud basemap and a vector map describing the scenario; an on-board camera unit configured to capture at least one image frame of a surrounding environment of the vehicle within the scenario; a feature extracting unit configured to extract a plurality of feature points from the at least one image frame; a feature matching unit configured to match the plurality of feature points with point cloud data in the point cloud basemap; an inertial measurement unit configured to measure a relative displacement of the vehicle within the scenario; and a coordinate calculating unit configured to determine a position of the vehicle within the vector map according to the result of the matching, and update the position of the vehicle according to the relative displacement.

According to another aspect of the present disclosure, there is provided a system for vehicle positioning, comprising a cloud server and a vehicle-side navigation system. The cloud server includes: a storage unit configured to store at least one fused map of at least one scene, wherein the fused map includes a point cloud basemap and a vector map describing the scenario. The vehicle-side navigation system includes: a wireless communication unit configured to obtain a fused map of a scenario where a vehicle is located; an on-board camera unit configured to capture at least one image frame of a surrounding environment of the vehicle within the scenario; a feature extracting unit configured to extract a plurality of feature points from the at least one image frame; a feature matching unit configured to match the plurality of feature points with point cloud data in the point cloud basemap; an inertial measurement unit configured to measure a relative displacement of the vehicle within the scenario; and a coordinate calculating unit configured to determine a position of the vehicle within the vector map according to a result of the matching, and update the position of the vehicle according to the relative displacement.

According to another aspect of the present disclosure, there is provided a device for vehicle positioning. The device comprises a memory having stored computer instructions thereon and a processor. The instructions, when executed by the processor, cause the processor to: obtain a fused map of a scenario where a vehicle is located, wherein the fused map includes a point cloud basemap and a vector map describing the scenario; capture at least one image frame of a surrounding environment of the vehicle within the scenario through a camera unit and extract a plurality of feature points from the at least one image frame; match the plurality of feature points with point cloud data in the point cloud basemap to determine a position of the vehicle within the vector map according to a result of the matching; and measure a relative displacement of the vehicle within the scenario through an inertial measurement unit, and update the position of the vehicle within the vector map according to the relative displacement.

According to yet another aspect of the present disclosure, there is provided a non-transitory computer-readable storage medium storing instructions that cause a processor to: obtain a fused map of a scenario where a vehicle is located, wherein the fused map includes a point cloud basemap and a vector map describing the scenario; capture at least one image frame of a surrounding environment of the vehicle within the scenario through a camera unit and extract a plurality of feature points from the at least one image frame; match the plurality of feature points with point cloud data in the point cloud basemap to determine a position of the vehicle within the vector map according to a result of the matching; and measuring a relative displacement of the vehicle within the scenario through an inertial measurement unit, and update the position of the vehicle within the vector map according to the relative displacement.

The vehicle positioning technology provided according to the above aspects of the present disclosure, by combining the visual repositioning based on feature point matching with the IMU positioning based on dead reckoning, can give full play to advantages of IMU, such as fast positioning response speed, low consumption of computing power resources and high operation efficiency. Meanwhile, it can also carry out correction at regular times and distances through visual repositioning of a single position point, and may avoid drift due to accumulated positioning errors, and thus provide accurate positioning results.

### BRIEF DESCRIPTION OF DRAWINGS

These and/or other aspects and advantages of the present disclosure will become clearer and easier to be understood from the following detailed description of embodiments of the present disclosure, taken in conjunction with the accompanying drawings, in which:
Fig. 1 shows a flowchart of a method for vehicle positioning according to an embodiment of the present disclosure.
Fig. 2 is a schematic diagram of an image frame of a surrounding environment of a vehicle within a scenario captured in the method for vehicle positioning according to an embodiment of the present disclosure.
Fig. 3 shows a conceptual schematic diagram of a fusion of vision and IMU in the method for vehicle positioning according to an embodiment of the present disclosure.
Fig. 4 shows a schematic diagram of a method for constructing a fused map in the method for vehicle positioning according to an embodiment of the present disclosure.
Fig. 5 shows a flowchart of a method for constructing a fused map in the method for vehicle positioning according to an embodiment of the present disclosure.
Fig. 6 shows a schematic diagram of a panoramic camera unit employed in the method for vehicle positioning according to an embodiment of the present disclosure.
Fig. 7 shows a flowchart of a method for matching feature points in an image frame with point cloud data in a point cloud basemap in the method for vehicle positioning according to an embodiment of the present disclosure.
Fig. 8 shows a schematic hardware block diagram of a device for vehicle positioning according to an embodiment of the present disclosure.
Fig. 9 shows a schematic structural block diagram of a device for vehicle positioning according to an embodiment of the present disclosure.

### DETAILED DESCRIPTION

In order for those skilled in the art to understand the present disclosure better, the present disclosure will be further illustrated in detail in conjunction with the accompanying drawings and specific implementations.

Firstly, several common vehicle positioning technologies are briefly described. As described above, the GPS positioning technology will suffer from a problem of low positioning precision due to signal occlusion in indoor scenarios, and thus cannot suit for accurate positioning of vehicles in indoor environments. Some existing indoor vehicle positioning methods apply inertial measurement unit (IMU) positioning technology, which reckons a next position of the vehicle by means of dead reckoning algorithm according to the known position of the vehicle and the vehicle's acceleration and angular velocity measured by the IMU. However, the problem of IMU positioning technology is that its positioning error will accumulate over time, leading to positioning drift.

In order to overcome the above-described problems, such as error accumulation and positioning drift, in IMU positioning technology, visual positioning technology can be employed as an alternative. The current visual processing scheme for vehicle positioning includes local processing of the image of a surrounding environment obtained at the vehicle to obtain a processed image, and performing matching of the processed image with the map locally or at the cloud to determine the current position of the vehicle. For example, the Simultaneous Localization and Mapping (SLAM) technology can be used in the field of vehicle positioning, which scans the point cloud basemap of indoor environment in advance, and then matches the pre-constructed point cloud basemap with the real-world images captured by the vehicle for performing feature point matching or point cloud data matching, and thus achieves an indoor positioning function.

However, there may be some problems in the existing visual positioning technical scheme based on SLAM, for example. Firstly, the existing SLAM technology needs to create the point cloud basemap using all of the video data of on-board cameras, much of which (e.g., adjacent video data), however, is duplicate data, and consumes a large amount of storage resources. Moreover, the SLAM technology needs the help of visual feature extracting, matching and calculating, which also consumes a large amount of computing power resources. Secondly, in a case that the vehicle is located indoors, the lighting condition may be nonuniform, resulting in instability of degree of brightness of the images captured at the vehicle. If no filtering is performed on the images, the positioning based on the images with insufficient brightness may be inaccurate. Thirdly, compared with the outdoor environment in traditional vehicle positioning, the indoor environment may be more complicated. The traditional monocular SLAM positioning technology only has a single perspective and cannot cover the features of the indoor environment at different angles. Therefore, the visual positioning technology based on SLAM also has certain limitations, and thus cannot meet the developing requirement for indoor vehicle positioning. In view of this, the present disclosure proposes a vehicle positioning technology fusing vision and IMU.

Next, the basic idea of the vehicle positioning technology fusing vision and IMU in the present disclosure is briefly summarized. Firstly, considering that the network environment of an indoor scenario such as a parking lot may be poor, it may take a relatively long time for data transmission if the feature points or point cloud data in the images captured by the vehicle are transmitted to the cloud for matching, and thus in the embodiment of the present disclosure, the prefabricated maps of indoor scenarios are provided to the vehicle for vehicle-side positioning. Secondly, in order to overcome problems such as being susceptible to drift in IMU positioning and significant consumption of computing power resources in SLAM positioning, the embodiment of the present disclosure performs SLAM positioning first so as to determine an absolute position of the vehicle within the indoor scenario, and then switches to IMU positioning to reckon a subsequent position of the vehicle within the indoor scenario step by step. By employing the vehicle positioning technology fusing vision and IMU in the embodiment of the present disclosure, advantages such as fast response speed, low consumption of storage and computing power resources, and no accumulated positioning error, can be achieved. In the following, the method and device for vehicle positioning provided by the present disclosure will be described in detail in conjunction with the accompanying drawings and examples.

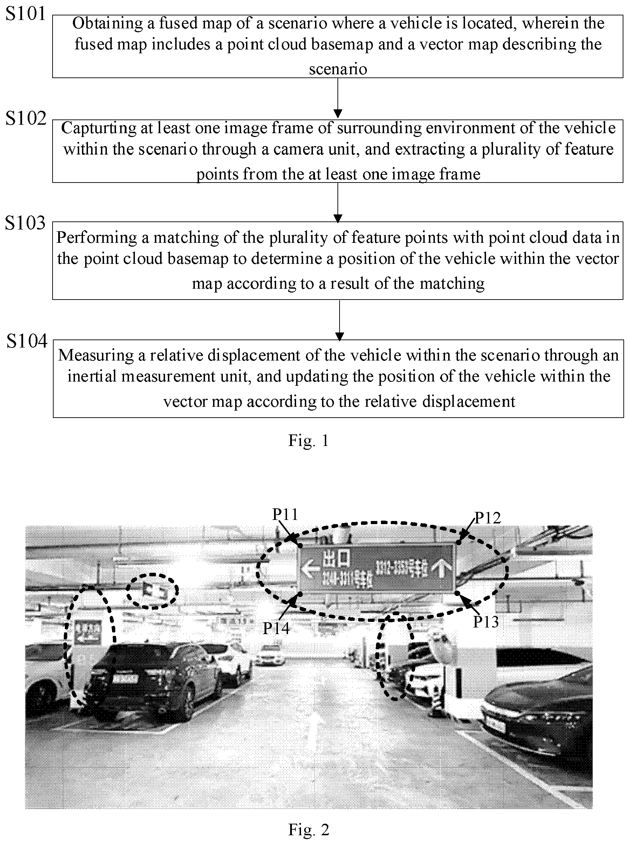

Firstly, a method for vehicle positioning according to an embodiment of the present disclosure will be described with reference to Figs. 1-9.

Fig. 1 shows a flowchart of a method for vehicle positioning according to an embodiment of the present disclosure. It can be understood that although an indoor parking lot is described as a scenario where vehicle positioning is needed in the embodiment of the present disclosure, the above application scenario is only a schematic example, and the present disclosure is not limited to this. For example, the method for vehicle positioning proposed in the embodiment of the present disclosure can be used for indoor positioning scenarios such as large-scale warehousing and logistics centers, and of course, it can also be used for accurate positioning of vehicles in outdoor scenarios.

As shown in Fig. 1, in step S101, a fused map of a scenario where a vehicle is located may be obtained, wherein the fused map includes a point cloud basemap and a vector map describing the scenario. According to the embodiment of the present disclosure, the scenario where the vehicle is located may be an indoor scenario such as a parking lot. In this embodiment, the fused map may encompass detailed information of the scenario where the vehicle is located, including the point cloud basemap and the vector map describing the parking lot. Take the case where the vehicle is located in the parking lot as an example, in which: the point cloud basemap includes point cloud data measured at the roads and intersections in the parking lot for various objects (such as stand columns, signboards, etc.) existing in the parking lot, which is suitable for being matched with images actually captured by the vehicle so as to perform visual repositioning; whereas the vector map includes vector graphic elements (such as points, lines, rectangles, polygons, circles, arcs, etc.) describing geometric characteristics of the roads and intersections in the parking lot, which is suitable for being presented at an on-board display for the driver to observe and know his/her position in real time. It should be noted that the point cloud basemap and the vector map contained in the fused map are associated with each other, that is, every position (e.g., road or intersection) in the parking lot may be represented by a specific vector graphic element, and a point cloud pattern that can be observed or measured from a position is also unique to this position, which may share a unique mapping relationship. Detailed description with respect to a specific construction process of a fused map will be made below.

As described above, considering that the network environment of an indoor scenario such as a parking lot may be poor, in this step S 101, it is preferable to obtain the fused map of the scenario before the vehicle enters it. In this case, compared with a need to transmit point cloud data or feature point data to the cloud by means of positioning at the cloud side, shortcomings such as slow uploading of data or slow obtaining of matching results due to an influence of network transmission conditions can be avoided, so that real-time requirements for vehicle positioning can be met by means of matching and positioning at the vehicle-side.

In step S102, at least one image frame of a surrounding environment of the vehicle within the scenario may be captured through a camera unit and a plurality of feature points may be extracted from the at least one image frame. Here, the image frame of the surrounding environment of the vehicle may refer to an image of environment currently located around the vehicle, which is obtained by taking the vehicle as the capturing point. As a non-limiting example, in a case that the vehicle is currently located in an indoor parking lot, the image data of the surrounding environment of the vehicle may be images of the indoor parking lot, including cars, roads, intersections, stand columns, signboards and the like. Here, feature points may be able to characterize objects in the surrounding environment, and thus be able to achieve vehicle positioning by feature point matching.

In the embodiment of the present disclosure, visual processing on image frames so as to extract feature points can be implemented by means of SLAM modeling. It should be understood that the processing in the present disclosure is not limited to SLAM modeling, which may include any image processing method capable of extracting feature points for feature point matching.

Fig. 2 is a schematic diagram of an image frame of a surrounding environment of a vehicle in a scenario captured in the method for vehicle positioning according to an embodiment of the present disclosure. As shown in the dotted box in Fig. 2, the captured image includes the stand columns (e.g., structural columns or load-bearing columns) and signboards (e.g., direction signboards) in the indoor parking lot, which are representative objects that are helpful for visual feature point matching. In this step S102, feature point may be extracted from the image frame by various image processing algorithms. As illustrative examples, algorithms such as Scale Invariant Feature Transform (SIFT), Speeded Up Robust Features (SURF), and Gradient Location and Orientation Histogram (GLOH) may be used to extract features such as angular points and edges of the above representative objects. As a non-limiting example, the angular points P11, P12, P13 and P14 for the direction signboard shown in Fig. 2 may be extracted as feature points, so as to be used for feature point matching. The specific implementation of the feature extracting algorithm described above will not be detailed here.

In step S103, a matching of the plurality of feature points may be performed with point cloud data in the point cloud basemap to determine a position of the vehicle within the vector map according to a result of the matching. It can be understood that since the point cloud basemap includes the point cloud data of the whole scenario measured in advance for various objects in the scenario, by matching the point cloud data with the feature points extracted from the actually captured image frame, the specific position of the capturing site within the scenario can be determined according to the similarity between the extracted feature points and the point cloud data. That is, the position of the vehicle within the vector map can be determined according to the visual positioning algorithm, according to a degree of the matching between the extracted feature points and the point cloud data and a mapping relationship between the point cloud basemap and the vector map. It should be noted that, because the objects within the scenario are stationary, the position determined based on the visual positioning algorithm can be regarded as an absolute position compared with the position reckoning algorithm of IMU positioning.

In step S104, a relative displacement of the vehicle within the scenario is measured through an inertial measurement unit, and the position of the vehicle within the vector map is updated according to the relative displacement. In this step S104, the method may start switching to IMU positioning based on successful visual repositioning in step S103. In the embodiment of the present disclosure, on the basis of the absolute position obtained by visual repositioning, the relative displacement of the vehicle may be measured using the inertial measurement unit, and the latest position of the vehicle within the vector map may be reckoned according to the estimated relative displacement, so as to continuously update according to the data measured by the inertial measurement unit. It can be understood that the offset measured by the inertial measurement unit in the embodiment of the present disclosure can be an offset in two-dimensional space, and of course it may further include an offset in the vertical altitude direction, and the present disclosure is not limited to this.

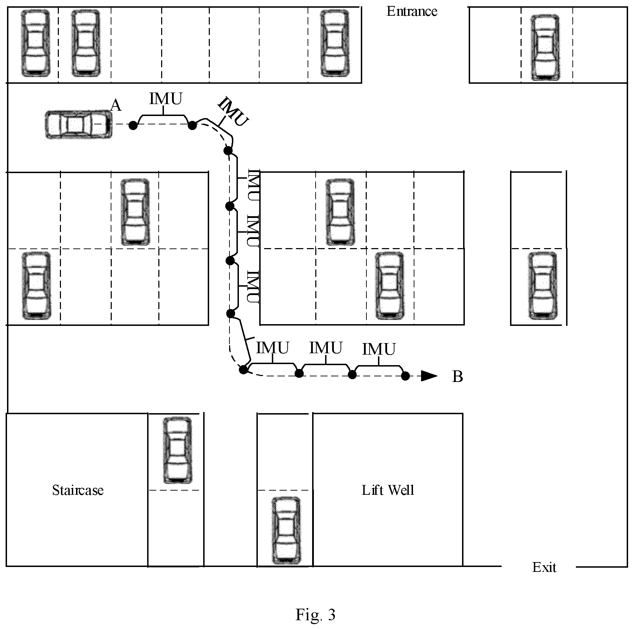

Fig. 3 shows a conceptual schematic diagram of fusing vision and IMU in the method for vehicle positioning according to an embodiment of the present disclosure. As shown in Fig. 3, the vehicle needs to be constantly positioned in the route from point A to point B in the parking lot, so as to help the driver to know his/her position at all times for vehicle manipulation. As can be seen from Fig. 3, the route from point A to point B depicts a plurality of black solid circles, in which at each black solid circle, an image frame of the surrounding environment can be captured through the camera unit of the vehicle, from which a plurality of feature points can be extracted and matched with the point cloud data in the point cloud basemap, so that the position of the vehicle within the vector map can be determined by visual repositioning technology (the above process may also be referred to as single-point visual repositioning). Thereafter, that is, between two black solid circles, the vehicle switches to IMU positioning so as to continuously and frequently update the position of the vehicle based on the relative displacement measured by IMU for many times, without performing visual positioning based on feature point matching again until the next black solid circle. In the embodiment of the present disclosure, determining the position of the vehicle according to the result of the feature point matching may be executed at a first frequency, whereas updating the position of the vehicle according to the relative displacement measured by the inertial measurement unit may be executed at a second frequency. The first frequency is lower than the second frequency. In short, in the embodiment of the present disclosure, the executing frequency of IMU positioning is higher than that of visual repositioning, and a fused positioning mode is realized which mainly employs IMU positioning based on dead reckoning and further combines visual repositioning based on feature point matching for correction at regular times and distances.

It can be understood that the first frequency and second frequency can be determined according to computing power of on-board navigation system, accuracy and response speed of positioning, size of area of the scenario where the vehicle is located, degree of clutter of the objects in the scenario, etc., and the present disclosure is not limited to this, as long as the visual and IMU fused positioning mode mainly employs IMU positioning, with the assistance of visual repositioning for correcting. Of course, it can be understood that the time or distance between two iterations of visual repositioning can also be determined according to the above requirements, and the present disclosure is not limited to this.

The vehicle positioning technology fusing vision and IMU according to the present disclosure, proposes a fused positioning mode, which mainly employs IMU positioning based on dead reckoning and further combines visual repositioning based on feature point matching for single-point correction at regular times and distances. It can give full play to advantages of IMU, such as fast positioning response speed, small data usage, low consumption of computing power resources and high operation efficiency. It can also replace pure visual repositioning in a short distance between two single-point visual repositioning, thereby avoiding disadvantages such as excessive consumption of computing power resources due to visual repositioning at all position points along the vehicle driving process. Meanwhile, it can also carry out correction at regular times and distances through visual repositioning of a single position point, and thus avoids the defect that in a case of using IMU positioning only, the longer the distance from the starting point is, the greater the position drift will be, thereby providing accurate indoor positioning results to meet the indoor navigation requirements.

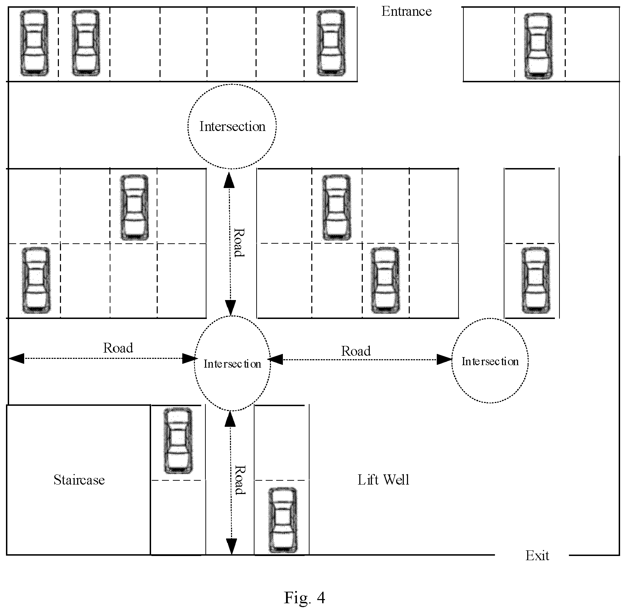

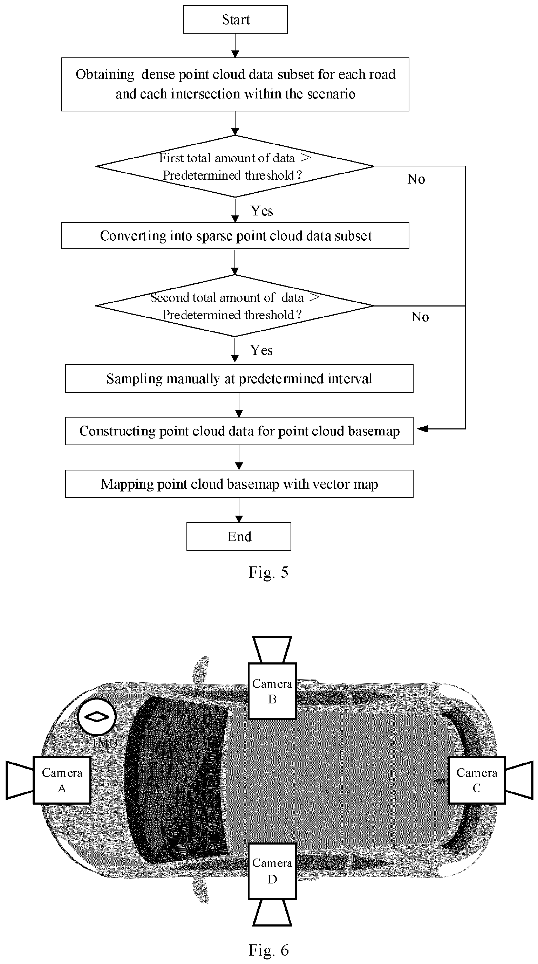

As described above, in the existing visual repositioning scheme based on feature point matching, it is required to create the point cloud basemap using all of the video data of the camera, much of which (e.g., adj acent video data), however, is duplicate data, and consumes a large amount of storage resources. For example, the point cloud data generated by a 30fps camera is 200MB/km, which will lead to excessive downloading or loading executing time and poor user experience, regardless of whether to download map data to the vehicle-side navigation system or load map data in the vehicle-side navigation system for navigation. In the embodiment of the present disclosure, in order to increase interactive efficiency of the map, increase download speed, and optimize indoor scenario prefabricated map, it is preferable that the size of the fused map should be less than, for example, 20MB. In the following, a method for constructing a fused map with a small amount of data, suitable for use in indoor navigation in units of roads and intersections according to the embodiment of the present disclosure will be described in detail in conjunction with Figs. 4 and 5.

Fig. 4 shows a schematic diagram of a method for constructing a fused map in the method for vehicle positioning according to an embodiment of the present disclosure. As shown in Fig. 4, it shows a topographic map in an indoor parking environment similar to that in Fig. 3, which includes intersections (nodes) and independent roads (links) having no intersections contained therein. As described above, the point cloud basemap in the fused map includes point cloud data describing the measurement of objects within the scenario at roads and intersections within the scenario, and the vector map in the fused map includes vector graphic elements describing the geometric characteristics of roads and intersections within the scenario. In the embodiment of the present disclosure, corresponding point cloud data subsets may be established respectively for each road and each intersection within the scenario, so as to generate the point cloud data for the point cloud basemap of the whole scenario. Thereafter, the point cloud data composed of respective point cloud data subsets may be mapped with respective vector graphic elements in the vector map to construct the fused map.

Fig. 5 shows a flowchart of a method for constructing a fused map in the method for vehicle positioning according to an embodiment of the present disclosure. As shown in Fig. 5, the creation of corresponding point cloud data subsets respectively for each road and each intersection within the scenario may begin with a step of obtaining dense point cloud data subsets for each road and each intersection within the scenario and determining whether a first total amount of data of respective dense point cloud data subsets exceeds a predetermined threshold (e.g., 20 MB). It can be understood that the predetermined threshold may be determined by size of area of the indoor scenario, complexity of the objects and layout in the scenario, computing power of the vehicle navigation unit, etc., and the embodiment of the present disclosure is not limited to the above specific values. When the first total amount of data does not exceed the predetermined threshold, the respective dense point cloud data subsets may be directly taken as the point cloud data. However, when the first total amount of data exceeds the predetermined threshold, the respective dense point cloud data subsets may be converted into sparse point cloud data subsets in order to generate the point cloud data. Hereafter, it may be further determined whether the sparse point cloud data subsets meet the requirement for size.

With continued reference to Fig. 5, it may be determined whether a second total amount of data of respective sparse point cloud data subsets exceeds the predetermined threshold (e.g., 20 MB). When the second total amount of data does not exceed the predetermined threshold, the respective sparse point cloud data subsets may be directly taken as the point cloud data. However, when the second total amount of data exceeds the predetermined threshold, the sparse point cloud data subset for each road is manually sampled at a predetermined interval, and the sparse point cloud data subset for each intersection and the manually sampled sparse point cloud data subset for each road are taken as the point cloud data. In other words, if the converted sparse point cloud data subsets still cannot meet the above-described requirement of the predetermined threshold, then manually marking is needed, that is, recording point cloud data once every predetermined interval (e.g., 0.5m) for each road, while recording point cloud data for each of all the intersections, so as to form the point cloud data from the manually marked point cloud data subsets. Hereafter, the point cloud basemap and the vector map which are associated with each other are stored in the cloud server for the vehicle to download and use.

On the other hand, as described above, the quality of the images captured in an indoor scenario may be low or the monocular visual repositioning only has a single perspective, so the visual positioning technology has certain limitations. In view of this, the embodiment of the present disclosure further proposes an improved visual positioning mode based on selecting preferred frames from multiway of image frames captured from different angles for feature point matching. Specifically, the camera unit in the embodiment of the present disclosure includes a plurality of cameras arranged around the vehicle. Accordingly, at least one image frame captured by the camera unit may be multiway of image frames with different perspectives from each other.

Fig. 6 shows a schematic view of a vehicle mounted with a plurality of cameras employed in the method for vehicle positioning according to an embodiment of the present disclosure. In the example shown in Fig. 6, a camera A as a front-view camera, a camera B as a right camera, a camera C as a rear-view camera and a camera D as a left camera are respectively mounted on the front, right, rear and left parts of the vehicle, and these cameras may be configured to capture the respective parts of the surrounding environment located in the front, right, rear and left of the vehicle. Preferably, the cameras A, B, C, and D together may constitute a panoramic camera unit, thereby providing an environmental image with a 360-degree full field of view perspective around the vehicle. In addition, an inertial measurement unit IMU is also shown in Fig. 6, which may provide inertial measurement information, so that vehicle navigation can use visual information together with the inertial measurement information for fused positioning, as described above.

It should be understood that the cameras A to D shown in Fig. 6 are on-board cameras, but the present disclosure is not limited to this. Additionally or alternatively, a camera for vehicle positioning may also be other devices capable of capturing images and transmitting the captured images to the vehicle. As a non-limiting example, such a device may be a mobile device (such as mobile phone) carried by an occupant (such as driver) of the vehicle 200.

Accordingly, in the embodiment of the present disclosure, in order to carry out vehicle-side feature matching, it is only needed to filter out the preferred image frame in multiway of image frames and only carry out feature matching on the preferred image frame, rather than to match the feature points of all of the image frames of multiway of image frames with the point cloud data in the prefabricated fused map. In this way, a full field of view perspective can be obtained using the panoramic camera, while the image frames can be filtered according to the confidence, so as to avoid excessive amount of data from participating in the feature matching computing and thus excessive consumption of computing power resources, thus realizing accurate repositioning while ensuring a small amount of data.

As a schematic example of feature point matching under the confidence filtering mechanism, in the embodiment of the present disclosure, multiway of image frames of the surrounding environment of the vehicle may be captured at different angles through a plurality of cameras of the camera unit. Then, feature points may be extracted from each way of image frames in the multiway of image frames, and confidences of the extracted feature points from each way of image frames may be calculated. Hereafter, a preferred frame may be selected from multiway of image frames according to the confidence of each way of image frames. For example, a first frame in sequence with a confidence higher than a threshold (as a non-limiting example, the threshold is 70%) or a frame with the highest confidence may be selected from the multi-way of image frames as the preferred frame. As a non-limiting example, for N image frames of N-way of image frames at a certain moment, the confidence of the N image frames may be calculated, and an image frame with the highest confidence may be selected as the preferred frame of the N image frames at that moment. In the present disclosure, a confidence may be a value characterizing quality of the image frame. For example, the more feature points are extracted from the image frame, the higher the confidence of the image frame is.

Finally, the plurality of feature points in the selected preferred frame may be matched with the point cloud data in the point cloud basemap so as to determine the position of the vehicle within the vector map according to the result of the matching, and thus the visual repositioning is completed. In this way, the feature points of an image frame with relatively high quality may be used for feature point matching in vehicle-side visual repositioning, thereby improving the accuracy of feature point matching; moreover, for N-way of image frames, only the amount of data of one-way of image frame is used for feature point modeling and matching computing, so that the amount of data in computing and computing power resources in the matching process are not significantly increased on the basis of ensuring visual repositioning with a full field of view perspective, and the amount of data here is basically the same as that in the case of monocular visual positioning by a single on-board camera.

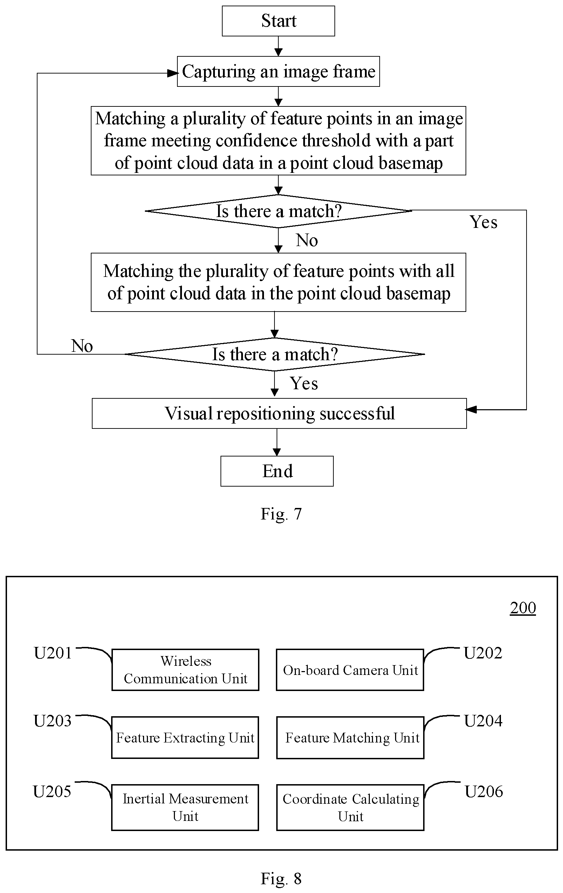

On the other hand, the area of the indoor scenario may be relatively large, so if searching and matching is carried out in the range of the whole point cloud basemap during feature matching, the response speed of positioning will be significantly reduced and more computing power resources will be consumed. In view of this, the present disclosure also proposes a visual repositioning mode, which firstly carries out point cloud feature matching in the local neighborhood, and if it fails, switches to the global range for matching. The local plus global feature point matching mode of the embodiment of the present disclosure will be described below in conjunction with Fig. 7.

Fig. 7 shows a flowchart of a method for matching feature points in an image frame with point cloud data in a point cloud basemap in the method for vehicle positioning according to an embodiment of the present disclosure. As shown in Fig. 7, firstly, at least one image frame of a surrounding environment of a vehicle within a scenario is captured through a camera unit. For example, when the vehicle is equipped with a single on-board camera, features may be extracted from the image frames captured by the camera and matched with the point cloud data in the point cloud basemap. When the vehicle is equipped with a plurality of cameras to constitute a panoramic camera system, the multi-way of image frames captured thereby may be matched with the point cloud data without considering the amount of data in computing and the consumption of computing power resources. In this case, preferably, a plurality of feature points in one-way of image frame meeting the confidence threshold as described above may be matched with the point cloud data in the point cloud basemap.

Hereafter, the feature points extracted from the determined image frame may be matched with a part of point cloud data corresponding to the current position of the vehicle. In an embodiment of the present disclosure, the part of point cloud data includes point cloud data subsets for roads and intersections within a predetermined range of the current position of the vehicle. Accordingly, if in the point cloud data, there is a match for the extracted feature points, the visual repositioning is successful, so that an absolute position of the vehicle within the vector map is determined according to the mapping relationship between the point cloud basemap and the vector map. It can be understood that the above-described predetermined range may be determined according to size of the area occupied by the indoor environment, computing power of the on-board navigation system, accuracy of positioning and requirements for response speed, etc., and the present disclosure does not limit the specific value.

However, if in the part of point cloud data, there is no match for the extracted feature points, it is necessary to expand the range for matching to search for a match in the whole point cloud basemap. Specifically, these feature points may be matched with all the point cloud data in the point cloud basemap. Similar to matching in part of the point cloud data, if in all of the point cloud data, there is a match for the extracted feature points, the visual repositioning is successful, so that an absolute position of the vehicle within the vector map may be determined according to the mapping relationship between the point cloud basemap and the vector map. Of course, if in all of the point cloud data, there is still no match, it may be determined that the visual repositioning has failed. Thereafter, the image frames of the surrounding environment of the vehicle may be captured again after an interval of a predetermined distance, and the above process may be repeated, until the visual repositioning is successful. According to the embodiment of the present disclosure, by dividing the point cloud basemap in units of roads and intersections, and correspondingly creating the point cloud data subsets corresponding to the roads and intersections, when performing a matching of feature points, the searching amount of data to loop through in the visual matching process can be effectively reduced, and the searching efficiency is increased.

It can be understood that when the visual repositioning is successful, that is, the absolute position of the vehicle within the vector map is successfully determined, the method may switch to the IMU positioning mode with a high executing frequency, thereby reducing the amount of data used in the positioning process, effectively saving computing power resources and improving the response speed and executing efficiency of positioning. Of course, after an interval of a predetermined time interval or a predetermined distance, visual repositioning may be performed once again, so as to correct error accumulation and positioning drift caused by IMU positioning at regular times or distances, and thus low-frequency visual repositioning and high-frequency IMU positioning are performed repeatedly, as described above in conjunction with Fig. 3.

Returning to Fig. 1, as described above, the scenario where the vehicle needs to be positioned may include an indoor parking lot. Accordingly, the method for vehicle positioning according to the embodiment of the present disclosure may further comprise presenting the vector map and the position of the vehicle within the vector map to the driver of the vehicle, so as to help the driver to know his/her position in the scenario in time for making appropriate navigation decisions. For example, in a case that the absolute position of the vehicle within the vector map is determined by visual positioning and the latest position of the vehicle within the vector map is updated in real time by IMU positioning, the vector map to be displayed on the display of the vehicle may be rendered based on the real-time position coordinates, so as to present the positioning result to the driver for human-computer interaction.

The method for vehicle positioning according to the embodiment of the present disclosure has been described above in conjunction with the accompanying drawings, which can overcome problems such as being susceptible to drift in IMU positioning technology and significant consumption of computing power resources in SLAM positioning technology. The vehicle positioning technology fusing vision and IMU according to the embodiment of the present disclosure, can give full play to advantages of IMU, such as fast positioning response speed, low consumption of computing power resources and high operation efficiency. Meanwhile, it can also carry out correction at regular times and distances through visual repositioning of a single position point, avoid drift due to accumulated positioning errors, and provide accurate positioning results.

According to another aspect of the present disclosure, there is provided a device for vehicle positioning. The device 200 for vehicle positioning will be described in detail in conjunction with Fig. 8.

Fig. 8 shows a structural block diagram of a device for vehicle positioning according to an embodiment of the present disclosure. As shown in Fig. 8, the device 200 includes a wireless communication unit U201, an on-board camera unit U202, a feature extracting unit U203, a feature matching unit U204, an inertial measurement unit U205, and a coordinate calculating unit U206. Each of the components can respectively perform each step/function of the vehicle positioning method described above in conjunction with Figs. 1- 7, so in order to avoid repetition, only a brief description of the device will be given below, and the detailed description of the same details will be omitted.

The wireless communication unit U201 may obtain a fused map of a scenario where a vehicle is located, wherein the fused map includes a point cloud basemap and a vector map describing the scenario. According to the embodiment of the present disclosure, the scenario where the vehicle is located may be an indoor scenario such as a parking lot. In this embodiment, the fused map may include a point cloud basemap and a vector map describing the parking lot, wherein: the point cloud basemap includes point cloud data measured at roads and intersections in the parking lot for various objects (such as stand columns, signboards, etc.) existing in the parking lot; whereas the vector map includes vector graphic elements (such as points, lines, rectangles, polygons, circles and arcs, etc.) describing geometric characteristics of the roads and intersections in the parking lot. It should be noted that the point cloud basemap and the vector map contained in the fused map are associated with each other. Preferably, the wireless communication unit U201 may obtain the fused map of the scenario before the vehicle enters it. In this case, problems such as slow uploading of data or slow obtaining of matching results due to an influence of network transmission conditions can be avoided, so that real-time requirements for positioning can be met by means of matching and positioning at the vehicle-side. In the embodiment of the present disclosure, the above-described fused map may be obtained through technologies such as Wi-Fi, cellular, Bluetooth, etc., and the present disclosure is not limited to this.

The on-board camera unit U202 may capture at least one image frame of the surrounding environment of the vehicle within the scenario. Still taking the indoor parking lot as an example, the images captured by the on-board camera unit U202 include stand columns (e.g., structural columns or load-bearing columns) and signboards (e.g., direction signboards) in the indoor parking lot, which are representative objects that are helpful for visual feature point matching.

The feature extracting unit U203 may extract a plurality of feature points from the at least one image frame. In the embodiment of the present disclosure, the feature extracting unit U203 may extract feature points from the image frame through various image processing algorithms, such as Scale Invariant Feature Transform (SIFT), Speeded Up Robust Features (SURF), Gradient Location and Orientation Histogram (GLOH) and the like, and extract features such as angular points and edges of the above-described representative objects. The specific implementation of the feature extracting algorithm described above will not be detailed here.

The feature matching unit U204 may match the plurality of feature points with point cloud data in the point cloud basemap. In the embodiment of the present disclosure, since the point cloud basemap includes the point cloud data of the whole scenario measured in advance for various objects in the scenario, by matching the point cloud data with the feature points extracted from the actually captured image frame, the above-described matching process can be based on the similarity between the extracted feature points and the point cloud data, and the specific process will not be detailed here.

The inertial measurement unit U205 may measure a relative displacement of the vehicle within the scenario. In the embodiment of the present disclosure, the inertial measurement unit U205 may include an accelerometer, a gyroscope, etc., for measuring the acceleration and angular velocity of the vehicle within the scenario, so as to estimate the relative displacement of the vehicle within the scenario for position estimation.

The coordinate calculating unit U206 may determine a position of the vehicle within the vector map according to a result of the matching, and update the position of the vehicle according to the relative displacement. As described above, because the objects within the scenario are stationary, the position determined based on the visual positioning algorithm can be regarded as an absolute position compared with the position reckoning algorithm of IMU positioning. Therefore, on the basis of the result of the matching provided by the feature matching unit U204, the visual repositioning may be successfully performed to determine the absolute position of the vehicle within the scenario, and then the vehicle switches to IMU positioning, so that the position of the vehicle within the scenario can be continuously updated according to the relative displacement provided by the inertial measurement unit U205. In the embodiment of the present disclosure, on the basis of the absolute position obtained by visual repositioning, the coordinate calculating unit U206 may use the inertial measurement unit to measure the relative displacement of the vehicle and reckon the latest position of the vehicle within the vector map according to the estimated relative displacement, so as to continuously update according to the data measured by the inertial measurement unit.

Optionally, the device 200 may further include a display (not shown) for presenting the vector map and the position of the vehicle within the vector map to the driver of the vehicle, so as to help the driver to know his/her position in the scenario in time for making appropriate navigation decisions.

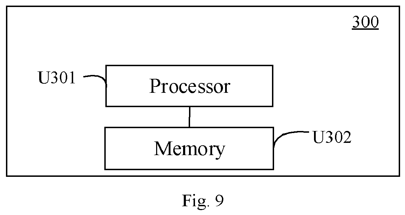

According to another aspect of the present disclosure, a device for vehicle positioning is provided. The device 300 for vehicle positioning will be described in detail below in conjunction with the Fig. 9.

Fig. 9 shows a hardware block diagram of a device for vehicle positioning according to an embodiment of the present disclosure. As shown in Fig. 9, the device 300 includes a processor U301 and a memory U302.

The processor U301 may be any device with processing capability capable of implementing the functions of various embodiments of the present disclosure, for example, it may be a general-purpose processor, a digital signal processor (DSP), an ASIC, a field programmable gate array signal (FPGA) or other programmable logic device (PLD), discrete gate or transistor logic, discrete hardware components or any combination thereof designed for performing the functions described herein.

The memory U302 may include computer system readable media in the form of volatile memory, such as random access memory (RAM) and/or cache memory, and may further include other removable/non-removable, volatile/nonvolatile computer system memories, such as hard disk drive, floppy disk, CD-ROM, DVD-ROM or other optical storage media.

In this embodiment, the memory U302 has stored computer program instructions therein, and the processor U301 may execute the instructions stored in the memory U302. When the computer program instructions are executed by the processor, the processor is caused to perform the method for vehicle positioning of the embodiments of the present disclosure. The method for vehicle positioning is basically the same as that described above with reference to Figs. 1 to 7, and therefore, in order to avoid repetition, it will not be detailed here.

The device for vehicle positioning according to the embodiment of the present disclosure has been described above in conjunction with the accompanying drawings, which can overcome problems such as being susceptible to drift in IMU positioning technology and significant consumption of computing power resources in SLAM positioning technology. The vehicle positioning technology fusing vision and IMU according to the embodiment of the present disclosure, can give full play to advantages of IMU, such as fast positioning response speed, low consumption of computing power resources and high operation efficiency. Meanwhile, it can also carry out correction at regular times and distances through visual repositioning of a single position point, avoid drift due to accumulated positioning errors, and provide accurate positioning results.

According to yet another aspect of the present disclosure, there is provided a system for vehicle positioning. The system may include a device for vehicle positioning (also referred to as a vehicle-side navigation system) and a cloud server as described above with reference to Figs. 8 and 9. For details with respect to the device used for vehicle positioning, references may be made to Figs. 8 and 9, which will not be detailed here. The cloud server may include a storage unit configured to store fused maps of at least one scenario. For example, the cloud server may maintain a plurality of fused maps of a plurality of indoor parking lots. Accordingly, a fused map of a specific scenario may be sent to the vehicle in response to a request by the vehicle-side navigation system, for use in indoor navigation of the vehicle.

The method/device for vehicle positioning according to the present disclosure can also be implemented by providing a computer program product containing program codes for implementing the said method or device, or by arbitrary storage medium storing such a computer program product.

The basic principles of the present disclosure have been described above in combination with specific embodiments, but it should be pointed out that the advantages, benefits, effects and the like mentioned in the embodiments of the present disclosure are only examples rather than limitations, and these advantages, benefits, effects and the like cannot be considered as necessary for various embodiments of the present disclosure. In addition, the specific details disclosed above are only for the purpose of illustration and easy understanding, but not for limitation, and the above details do not limit that the present disclosure must be implemented with the above specific details.

The block diagrams of devices, equipment, apparatuses and systems involved in the embodiments of the present disclosure are only illustrative examples and are not intended to require or imply that they must be connected, arranged and configured in the manner as shown in the block diagram. As those skilled in the art will recognize, these devices, equipment, apparatuses and systems can be connected, arranged and configured in arbitrary way. Words such as "including", "containing", "having" and so on are open words, which mean "including but not limited to" and can be used interchangeably therewith. Terms such as "or" and "and" as used herein refer to the phrase "and/or", and can be used interchangeably therewith, unless clearly indicated otherwise in the context. The word "such as" as used herein refers to the phrase "such as but not limited to", and can be used interchangeably therewith.

In addition, as used herein, the "or" used in the enumeration of items starting with "at least one of" indicates a separate enumeration, so that, for example, the enumeration of "at least one of A, B or C" means A or B or C, or AB or AC or BC, or ABC (i.e. A and B and C). Furthermore, the wording "exemplary" does not mean that the described example is preferred or better than other examples.

It should also be pointed out that in the device and method of the present disclosure, various components or steps can be decomposed and/or recombined. The decomposition and/or recombination should be regarded as equivalent solutions of the present disclosure.

For ordinary skilled in the art, it can be understood that all or any part of the method and device disclosed in the present disclosure can be implemented in hardware, firmware, software or their combination in any computing device (including processor, storage medium, etc.) or network of computing devices. The hardware may be a general-purpose processor, a digital signal processor (DSP), an ASIC, a field programmable gate array signal (FPGA) or other programmable logic device (PLD), discrete gate or transistor logic, discrete hardware components, or any combination thereof designed for performing the functions described herein. A general-purpose processor may be a microprocessor, but alternatively, the processor may be any commercially available processor, controller, microcontroller or state machine. A processor may also be implemented as a combination of computing devices, such as a combination of a DSP and a microprocessor, a plurality of microprocessors, one or more microprocessors cooperating with a DSP core, or any other such configuration. The software may exist in any form of computer-readable tangible storage media. By way of example and not limitation, such computer-readable tangible storage media may include RAM, ROM, EEPROM, CD-ROM or other optical disk storage, magnetic disk storage or other magnetic storage devices or any other tangible media that can be used to carry or store desired program codes in the form of instructions or data structures and that can be accessed by a computer. As used herein, a disc includes compact disc (CD), laser disc, optical disc, digital versatile disc (DVD), floppy disc and Blu-ray disc.

Various changes, substitutions and modifications may be made to the techniques described herein without departing from the taught techniques defined by the appended claims. In addition, the scope of the claims of the present disclosure is not limited to the specific aspects of the above-described processes, machines, manufactures, composition of events, means, methods and actions. Currently existing or later-to-be-developed processes, machines, manufactures, composition of events, means, methods or actions that perform substantially the same functions or achieve substantially the same results as the corresponding aspects described herein may be utilized. Accordingly, the appended claims include, within their scope, such processes, machines, manufactures, composition of events, means, methods or actions.

The above description of the disclosed aspects is provided to enable any skilled in the art to make or use the present disclosure. Various modifications to these aspects will be obvious to those skilled in the art, and the general principles defined herein can be applied to other aspects without departing from the scope of the present disclosure. Therefore, the present disclosure is not intended to be limited to the aspects shown herein, but is to be accorded the widest scope consistent with the principles and novel features disclosed herein.

The foregoing description has been presented for purposes of illustration and description. Furthermore, this description is not intended to limit the embodiments of the present disclosure to the forms disclosed herein. Although several example aspects and embodiments have been discussed above, those skilled in the art will recognize certain variations, modifications, changes, additions and sub-combinations thereof.

## Claims

1. A method for vehicle positioning, comprising:
obtaining (S101) a fused map of a scenario where a vehicle is located, wherein the fused map includes a point cloud basemap and a vector map describing the scenario;
capturing (S102) at least one image frame of a surrounding environment of the vehicle within the scenario through a camera unit and extracting a plurality of feature points from the at least one image frame;
performing (S103) a matching of the plurality of feature points with point cloud data in the point cloud basemap to determine a position of the vehicle within the vector map according to a result of the matching; and
measuring (S104) a relative displacement of the vehicle within the scenario through an inertial measurement unit and updating the position of the vehicle within the vector map according to the relative displacement.

2. The method according to claim 1, wherein determining the position of the vehicle according to the result of the matching is executed at a first frequency, and updating the position of the vehicle according to the relative displacement is executed at a second frequency, wherein the first frequency is lower than the second frequency.

3. The method according to claim 1 or 2, wherein the point cloud basemap includes point cloud data describing measurement of objects within the scenario at roads and intersections within the scenario, and the vector map includes vector graphic elements describing geometric characteristics of roads and intersections within the scenario, and wherein,
the method further comprises pre-constructing the fused map by:
creating corresponding point cloud data subsets respectively for each road and each intersection within the scenario to generate the point cloud data; and
mapping the point cloud data with the vector graphic elements to construct the fused map.

4. The method according to claim 3, wherein creating corresponding point cloud data subsets respectively for each road and each intersection within the scenario comprises:
obtaining dense point cloud data subsets for each road and each intersection within the scenario, and determining whether a first total amount of data for respective dense point cloud data subsets exceeds a predetermined threshold, wherein
when the first total amount of data does not exceed the predetermined threshold, taking the respective dense point cloud data subsets as the point cloud data, and
when the first total amount of data exceeds the predetermined threshold, converting the respective dense point cloud data subsets into sparse point cloud data subsets to generate the point cloud data.

5. The method according to claim 4, wherein converting the respective dense point cloud data subsets into sparse point cloud data subsets to generate the point cloud data comprises:
determining whether a second total amount of data of respective sparse point cloud data subsets exceeds the predetermined threshold, wherein
when the second total amount of data does not exceed the predetermined threshold, taking the respective sparse point cloud data subsets as the point cloud data, and
when the second total amount of data exceeds the predetermined threshold, manually sampling the sparse point cloud data subset for each road at a predetermined interval, and taking the sparse point cloud data subset for each intersection and the manually sampled sparse point cloud data subset for each road as the point cloud data.

6. The method according to any of claims 3-5, wherein the camera unit includes a plurality of cameras arranged around the vehicle, and wherein capturing at least one image frame of a surrounding environment of the vehicle within the scenario through the camera unit and extracting the plurality of feature points from the at least one image frame comprises:
capturing multiway of image frames of the surrounding environment of the vehicle at different angles through the plurality of cameras;
extracting feature points from each way of image frames in the multiway of image frames;
calculating confidences of the extracted feature points from each way of image frames;
selecting a preferred frame from the multiway of image frames according to the confidences of each way of image frames; and
taking the feature points in the preferred frame as the plurality of feature points.

7. The method according to claim 6, wherein performing a matching of the plurality of feature points with point cloud data in the point cloud basemap to determine the position of the vehicle within the vector map according to the result of the matching comprises:
performing a matching of the plurality of feature points with a part of the point cloud data in the point cloud basemap corresponding to the current position of the vehicle, wherein the part of the point cloud data includes point cloud data subsets for the roads and intersections within a predetermined range of the current position of the vehicle, wherein
when the matching of the plurality of feature points with the part of the point cloud data succeeds, determining the position of the vehicle within the vector map according to the result of the matching and a mapping relationship between the point cloud basemap and the vector map,
when the matching of the plurality of feature points with the part of the point cloud data fails, performing a matching of the plurality of feature points with all the point cloud data in the point cloud basemap, and determining the position of the vehicle within the vector map according to the result of the matching of the plurality of feature points with all of the point cloud data.

8. The method according to any one of claims 1-7, wherein the scenario includes an indoor parking lot,
the method further comprises presenting the vector map and the position of the vehicle within the vector map to a driver of the vehicle.

9. A device (200) for vehicle positioning, comprising:
a wireless communication unit (U201) configured to obtain a fused map of a scenario where a vehicle is located, wherein the fused map includes a point cloud basemap and a vector map describing the scenario;
an on-board camera unit (U202) configured to capture at least one image frame of a surrounding environment of the vehicle within the scenario;
a feature extracting unit (U203) configured to extract a plurality of feature points from the at least one image frame;
a feature matching unit (U204) configured to perform a matching of the plurality of feature points with point cloud data in the point cloud basemap;
an inertial measurement unit (U205) configured to measure a relative displacement of the vehicle within the scenario; and
a coordinate calculating unit (U206) configured to determine a position of the vehicle within the vector map according to a result of the matching, and to update the position of the vehicle according to the relative displacement.

10. A system for vehicle positioning, comprising:
the device (200) for vehicle positioning according to claim 9; and
a cloud server,
wherein the cloud server includes a storage unit configured to store at least one fused map of at least one scenario, and the fused map includes a point cloud basemap and a vector map describing the scenario.

11. A device (300) for vehicle positioning, comprising:
a memory (U302) having stored computer instructions thereon; and
a processor (U301),
wherein the instructions, when executed by the processor (U301), cause the processor (U301) to perform the method according to any of claims 1-8.

12. A non-transitory computer-readable storage medium storing instructions that cause a processor (U301) to perform the method according to any of claims 1-8.
